# EUROPEAN PATENT APPLICATION

(11) **EP 4 617 403 A1**
(43) Date of publication of application: **17.09.2025**
(21) Application number: 25159018.8
(22) Date of filing: 20.02.2025
(51) Int. Cl.: C25B 1/16, B01J 31/00, C25B 1/22, C25B 1/27, C25B 9/19, C25B 9/21, C25B 9/70, C25B 15/08

(54) **ELECTROLYSIS DEVICE AND ELECTROLYSIS METHOD**

(30) Priority: 11.03.2024 JP 2024037598
(71) Applicant: Kabushiki Kaisha Toshiba, Tokyo 105-0023 (JP)
(72) Inventor: SUGANO, Yoshitsune, Minato-ku, Tokyo, 105-0023 (JP); TAMURA, Jun, Minato-ku, Tokyo, 105-0023 (JP); KIYOTA, Yasuhiro, Minato-ku, Tokyo, 105-0023 (JP)
(74) Representative: Hoffmann Eitle

(57) **Abstract**

An electrolysis device of an embodiment includes: a first electrolysis cell including a first tank equipped with a reduction electrode and producing a water-soluble gas, a second tank equipped with an oxidation electrode, and a diaphragm; a gas-liquid contact device bringing at least one of the water-soluble gas and its water-soluble substance produced in the first reaction tank into contact with a liquefaction recovery agent containing at least one of an electrolytic solution to produce a liquefied substance of the water-soluble gas; a first gas-liquid separator separating a gas-liquid mixture containing the liquefied substance of the water-soluble gas into liquid containing the liquefied substance of the water-soluble gas and gas; a distiller separating the liquid from the first gas-liquid separator into the liquefied substance of the water-soluble gas and an electrolytic solution component; and a pipe returning the solution component from the distillerto an electrolytic solution storage part.

## Description

### CROSS REFERENCE TO RELATED APPLICATION

### FIELD

Embodiments disclosed herein relate to an electrolysis device and an electrolysis method.

### BACKGROUND

The amount of production of ammonia is about 140 million tons in the world in a year and continues to rise. About 80% of the amount of production is utilized as a raw material for fertilizer and is mainly converted to other nitrogen compounds such as urea, nitric acid, ammonium nitrate, and ammonium sulfate. On the other hand, the remaining 20% thereof is utilized for manufacture of synthetic resin and fiber. To cope with the global population growth, the shortage of cultivated acreage, and the food shortages due to the sophistication of diet mainly in developing countries, the demand for ammonia is increased. Further, ammonia attracts attention as a use of an energy carrier owing to its ease of handling, high energy density, and a characteristic of containing no carbon and emitting no carbon dioxide when used.

At present, ammonia is industrially synthesized from a hydrogen gas and a nitrogen gas derived from fossil fuels such as petroleum, coal, or natural gas by the method called the Haber-Bosh process invented about 100 years ago. This synthesis reaction requires severe conditions such as high temperature (400 to 650°C) and high pressure (200 to 400 atm), consumes 1.2% of total energy in the world, and therefore emits a large amount of carbon dioxide. To form a sustainable society in the future, the development of an alternative process with low dependence on fossil fuels is expected.

Regarding the above point, a catalyst for producing ammonia (NH₃) from nitrogen (N₂) at normal temperature and pressure in an electrolysis method and an electrolysis device for manufacturing ammonia by reducing nitrogen by electrolysis is under development. For example, it has been reported that a molybdenum iodide complex having a PNP (2,6-bis(di-tert-butylphosphinomethyl)pyridine) ligand as a catalyst, alcohol or water as a proton source, and a solution containing a halide (II) of a lanthanoid metal, for example, samarium (II) iodide as a reducing agent are stirred in the presence of a nitrogen gas at normal temperature to thereby produce up to 4350 equivalents of ammonia per catalyst. In addition, the method using the molybdenum iodide complex having the PNP ligand as the catalyst and using a solution used in a cathode tank or both an electrolyte membrane and the solution used in the cathode tank as the proton source has been reported.

In the above electrolysis device that produces ammonia (NH₃) by the reduction of nitrogen (N₂), a low production efficiency and recovery efficiency of ammonia, an electrolysis product, in a reduction chamber (cathode chamber) where nitrogen is reduced to produce ammonia are problems. For example, ammonia (NH₃) gas produced in the reduction chamber (cathode chamber) is water soluble, so ammonia discharged from the reduction chamber is at least partially dissolved in an electrolytic solution as a water-soluble substance. Therefore, there is a need to efficiently recover ammonia from the ammonia water-soluble substance discharged from the reduction chamber to improve the efficiency of ammonia recovery and production. This is not limited to the production of ammonia, but the same issue arises when the electrolysis product is a water-soluble gas and a water-soluble gas product is to be recovered. In other words, there is a need to improve the recovery and production efficiency of water-soluble gas products in electrolysis devices that reduce substances to be reduced such as nitrogen to produce water-soluble gases.

### SUMMARY

The problem to be solved by the present invention is to provide an electrolysis device and an electrolysis method that enable to increase efficiency of recovery and production of water-soluble gases such as ammonia, which is a reduction product, and its water-soluble gas product.

An electrolysis device of an embodiment includes: a first electrolysis cell that includes a first reaction tank in which a reduction electrode is arranged, a substance to be reduced is supplied, and a water-soluble gas is produced as a reduction product, a second reaction tank in which an oxidation electrode is arranged and an electrolytic solution is supplied, and a diaphragm provided between the first reaction tank and the second reaction tank; a substance to be reduced supply part that supplies the substance to be reduced to the first reaction tank; an electrolytic solution circulation unit that includes a circulation pipe circulating the electrolytic solution outside the first electrolysis cell to supply the electrolytic solution to the second reaction tank and a storage tank of the electrolytic solution; a gas-liquid contact device that is supplied with at least one of the water-soluble gas and its water-soluble substance produced in the first reaction tank and brings a liquefaction recovery agent containing at least some components of the electrolytic solution into contact with at least one of the water-soluble gas and its water-soluble substance to discharge a gas-liquid mixture containing a liquefied substance of the water-soluble gas; a first gas-liquid separator that is supplied with the gas-liquid mixture discharged from the gas-liquid contact device to separate into a liquid component containing the liquefied substance of the water-soluble gas and a gas component; a distiller that separates the liquefied substance of the water-soluble gas and an electrolytic solution component from the liquid component discharged from the first gas-liquid separator; and a return pipe that returns the electrolytic solution component discharged from the distiller to a storage part of the electrolytic solution.

### BRIEF DESCRIPTION OF THE DRAWINGS

FIG. 1 is a diagram illustrating an electrolysis device of a first embodiment.
FIG. 2 is a diagram illustrating an electrolysis device of a second embodiment.
FIG. 3 is a diagram illustrating a first example of a second electrolysis cell in the electrolysis device illustrated in FIG. 2.
FIG. 4 is a diagram illustrating a second example of the second electrolysis cell in the electrolysis device illustrated in FIG. 2.
FIG. 5 is a diagram illustrating a third example of the second electrolysis cell in the electrolysis device illustrated in FIG. 2.

### DETAILED DESCRIPTION

Electrolysis devices and electrolysis methods according to embodiments will be hereinafter described with reference to the drawings. In the embodiments below, substantially the same constituent parts are denoted by the same reference signs and a description thereof may be partly omitted. The drawings are schematic, and the relation of thickness and planar dimension, a thickness ratio among parts, and so on may be different from actual ones.

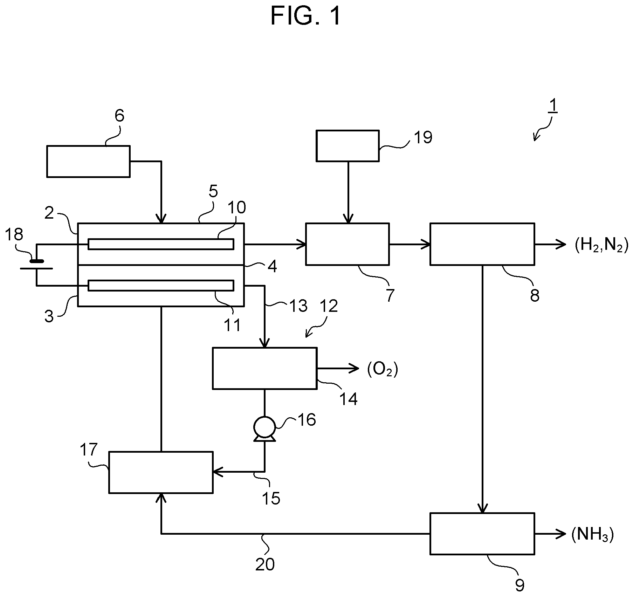

FIG. 1 is a diagram illustrating an electrolysis device 1 as an ammonia production apparatus of the embodiment. The electrolysis device 1 illustrated in FIG. 1 mainly includes: a first electrolysis cell 5 that includes a first reaction tank (cathode tank/reduction chamber) 2 that is supplied with nitrogen (N₂) as a gaseous substance to be reduced, a second reaction tank (anode tank/oxidation chamber) 3 that is supplied with an electrolytic solution containing water, and a diaphragm 4; a nitrogen supply device (substance to be reduced supply part) 6 that supplies nitrogen to the first reaction tank 2, a gas-liquid contact device 7 that brings at least one of ammonia (NH₃), which is contained in gas discharged from the first reaction tank 2, and its water-soluble substance into contact with a liquefaction recovery agent containing at least some components of the electrolytic solution to produce a gas-liquid mixture containing a liquefied substance of the water-soluble gas; a first gas-liquid separator 8 that is supplied with the gas-liquid mixture produced in the gas-liquid contact device 7 to separate into a liquid component containing the liquefied substance of the water-soluble gas and a gas component; and a distiller 9 that is supplied with the liquid component containing the liquefied substance of the water-soluble gas from the first gas-liquid separator 8 and separates the above liquid component into the liquefied substance of the water-soluble gas and the electrolytic solution component. Each part is described in detail below.

In the first electrolysis cell 5, a reduction electrode (cathode) 10 used for an electrochemical reduction reaction is arranged in the first reaction tank 2. An oxidation electrode (anode) 11 used for an electrochemical oxidation reaction is arranged in the second reaction tank 3. The diaphragm 4 allowing ions such as hydrogen ions (H⁺) and hydroxide ions (OH⁻) to move therethrough is arranged between the first reaction tank 2 and the second reaction tank 3. The first electrolysis cell 5 is separated into the first reaction tank 2 and the second reaction tank 3 by the diaphragm 4. Gaseous nitrogen (N₂) is supplied to the first reaction tank 2 from the nitrogen supply device 6. Alternatively, an electrolytic solution (second electrolytic solution) in which nitrogen (N₂) is dissolved may be supplied to the first reaction tank 2. An electrolytic solution (first electrolytic solution) containing water (H₂O) is supplied to the second reaction tank 3 by the electrolytic solution circulation unit 12. The electrolytic solution circulation unit 12 includes a second gas-liquid separator 14 that is supplied with the electrolytic solution discharged from the second reaction tank 3 and containing gaseous oxidation products (for example, O₂) produced by the oxidation electrode 11 through a first circulation pipe 13, a circulation pump 16 provided in a second circulation pipe 15, and an electrolytic solution storage tank 17.

A power supply (external or internal power supply) 18 is electrically connected to the reduction electrode (cathode) 10 and the oxidation electrode (anode) 11. By applying electric power from the power supply 18 to the reduction electrode 10 and the oxidation electrode 11, a reduction reaction occurs at the reduction electrode 10 and an oxidation reaction occurs at the oxidation electrode 11. In the second reaction tank 3, for example, water (H₂O) in the electrolytic solution is oxidized at the oxidation electrode 11 to produce oxygen (O₂), hydrogen ions (H⁺), and electrons (e⁻). The produced oxygen is discharged from the second reaction tank 3 through the first circulation pipe 13 together with the electrolytic solution and is separated into the electrolytic solution and oxygen in the second gas-liquid separator 14. In the first reaction tank 2, nitrogen (N₂) is reduced by an ammonia-producing catalyst, for example, to produce ammonia (NH₃).

Ammonia is a water-soluble gas, and the electrolytic solution may move into the first reaction tank 2 from the second reaction tank 3 through the diaphragm 4. When the electrolytic solution moves into the first reaction tank 2 from the second reaction tank 3, it is possible that at least part of ammonia, which is the water-soluble gas, dissolves in the electrolytic solution present in the first reaction tank 2. Since at least part of ammonia, which is the water-soluble gas, is considered to exist in the electrolytic solution as a water-soluble substance (water-soluble gas product), ammonia cannot be efficiently recovered by simply applying gas-liquid separation process to the discharged products from the first reaction tank 2. Therefore, in the electrolysis device 1 of the embodiment, the discharged product from the first reaction tank 2, that is, a gas component containing ammonia (NH₃) as a reduction product, unreacted nitrogen (N₂), hydrogen (H₂) produced by co-electrolysis, or other gases, and a liquid component containing the water-soluble substance of ammonia, electrolytic solution, or other liquids, are sent to the gas-liquid contact device 7 that brings the discharged products into contact with the liquefaction recovery agent to obtain a liquefied substance, in which ammonia (NH₃), which is the water-soluble gas, is liquefied by the liquefaction recovery agent. The liquefaction recovery agent is supplied to the gas-liquid contact device 7 by a liquefaction recovery agent supply device 19.

A liquid containing at least some components of the electrolytic solution is used as the liquefaction recovery agent. When the reduction product is ammonia (NH₃), ammonia reacts with sulfuric acid or sulfate to produce ammonium sulfate (NH₄)₂SO₄ according to Formula (1) or Formula (2) below. Ammonium sulfate is easily soluble in water and readily becomes a liquid. Therefore, it is preferable to use sulfuric acid or sulfate as the liquefaction recovery agent.

2NH₃ + H₂SO₄ → (NH₄)₂SO₄ ... (1)

2NH₄OH + H₂SO₄ → (NH₄)₂SO₄ + 2H₂O ... (2)

On the other hand, it is preferable to use sulfates such as potassium sulfate (K₂SO₄), calcium sulfate (CaSO₄), and sodium sulfate (Na₂SO₄) as the electrolytic solution. This allows the recovery of ammonia from ammonium salt liquefied by the liquefaction recovery agent, and a base portion of the ammonium salt can be reused as the electrolytic solution.

In the gas-liquid contact device 7, a gas-liquid mixture is discharged, which is a mixture of, for example, the liquid component containing the liquefied substance of the water-soluble gas such as ammonium sulfate ((NH₄)₂SO₄) and the liquefaction recovery agent such as sulfuric acid, and the gas component containing unreacted nitrogen (N₂), hydrogen (H₂) produced by side reactions, and other gases. The gas-liquid mixture discharged from the gas-liquid contact device 7 is sent to the first gas-liquid separator 8, where it is separated into the liquid component containing the liquefied substance of the water-soluble gas and the liquefaction recovery agent such as sulfuric acid, and the gas component containing nitrogen (N₂), hydrogen (H₂), and other gases. The separated gas component is separated into nitrogen (N₂) and hydrogen (H₂) as needed, and the separated nitrogen is reused as a raw material.

The liquid component separated in the first gas-liquid separator 8 is sent to the distiller 9, where it is separated into the liquefied substance of the water-soluble gas such as ammonium sulfate ((NH₄)₂SO₄) and the liquefaction recovery agent such as sulfuric acid by the distiller 9. The distillate containing the water-soluble gas such as ammonium sulfate ((NH₄)₂SO₄) separated by the distiller 9 is sent to a device that performs at least one of cooling and compression to be liquefied. Ammonium sulfate ((NH₄)₂SO₄) obtained by distillation can be heated, for example, to obtain ammonium (NH₃). Sulfuric acid (H₂SO₄), potassium sulfate (K₂SO₄), calcium sulfate (CaSO₄), sodium sulfate (Na₂SO₄), and other sulfates obtained by distillation are returned to the electrolytic solution storage tank 17 of the electrolytic solution circulation unit 12 by a reflow pipe 20 to be reused as the electrolytic solution.

As described above, in the electrolysis device 1 of the embodiment, when the reduction product is a water-soluble gas such as ammonia, the water-soluble gas can be liquefied by the liquefaction recovery agent containing at least some components of the electrolytic solution and converted into the liquefied substance that can be separated from the electrolytic solution by distillation to be recovered. This enables efficient recovery of ammonia and other water-soluble gases and also improves the production efficiency of ammonia and other gases. As a result, it is possible to provide the electrolysis device 1 and the electrolysis method with improved efficiency of recovery and production of ammonia, or other gases, which are water-soluble gases. In the above embodiment, it is explained that ammonia, the water-soluble gas, is produced and recovered as the reduction product. However, the reduction product is not limited to ammonia, and the electrolysis device 1 of the embodiment can be applied when the reduction product is a water-soluble gas. In such a case, the electrolytic solution and the liquefaction recovery agent containing at least some components thereof can be selected and used according to the water-soluble gas as the reduction product.

The following is a description of parts that make up each part of the electrolysis device 1, constituent materials of substances used in each part, and the like. However, the materials described below are only examples and are not limited thereto. For example, the oxidation electrode 11 is made of a material that reduces activation energy to generate an oxidation reaction. In other words, the oxidation electrode 11 is composed of a material that lowers overvoltage when oxidizing H₂O or OH⁻ to generate an electron-withdrawing reaction. Examples of the constituent material of such oxidation electrode 11 include platinum (Pt), manganese oxide (Mn-O), iridium oxide (Ir-O), nickel oxide (Ni-O), cobalt oxide (Co-O), iron oxide (Fe-O), tin oxide (Sn-O), indium oxide (In-O), ruthenium oxide (Ru-O), and other binary metal oxides, Ni-Co -O, La-Co-O, Ni-La-O, Sr-Fe-O, and other ternary metal oxides, Pb -Ru-Ir-O, La-Sr-Co-O, and other quaternary metal oxides, or metal complexes such as Ru complexes or Fe complexes.

In carrying out the reduction reaction, the reduction electrode 10 is preferably composed of conductive electrode materials. It is also preferable to have a porous structure because a reaction area can be increased by gas diffusibility. Concretely, the reduction electrode 10 preferably has a gas diffusion layer and a catalyst layer. For the gas diffusion layer, carbon paper, carbon cloth, carbon felt, and the like are used, for example. The catalyst layer contains a porous carbon material (particles) as a catalyst support and a polymeric material that binds the porous carbon material as the catalyst support, in addition to the reduction catalyst that reduces nitrogen to produce ammonia.

The reduction catalyst (ammonia production catalyst) used in the reduction electrode 10 promotes the production of ammonia from nitrogen and, for example, a molybdenum complex is used but not limited thereto. Examples of the ammonia production catalyst include (A) to (D) molybdenum complexes shown below.

A first example is (A) a molybdenum complex having, as a PCP ligand, N,N-bis(dialkylphosphinomethyl)dihydrobenzimidazolidene (where two alkyl groups may be the same or different, and at least one hydrogen atom of a benzene ring may be substituted with an alkyl group, an alkoxy group, or a halogen atom).

A second example is (B) a molybdenum complex having, as a PNP ligand, 2,6-bis(dialkylphosphinomethyl)pyridine (where two alkyl groups may be the same or different, and at least one hydrogen atom of a pyridine ring may be substituted with an alkyl group, an alkoxy group, or a halogen atom).

A third example is (C) a molybdenum complex having, as a PPP ligand, bis(dialkylphosphinomethyl)arylphosphine (where two alkyl groups may be the same or different).

A fourth example is (D) a molybdenum complex expressed by trans-Mo(N₂)₂ (R1R2R3P)₄ (where R1, R2, R3 are arealkyl groups or aryl groups which may be the same or different, and two R3s may connect with each other to form an alkylene chain).

In the above molybdenum complexes, the alkyl group may be, for example, a methyl group, an ethyl group, a propyl group, a butyl group, a pentyl group, a hexyl group, or the like, or may be a straight chain or branched alkyl group of a structural isomer of them, or a cyclic alkyl group such as a cyclopropyl group, a cyclobutyl group, a cyclopentyl group, or a cyclohexyl group. The carbon number of the alkyl group is preferably 1 to 12, and more preferably 1 to 6. The alkoxy group may be, for example, a methoxy group, an ethoxy group, a propoxy group, a butoxy group, a pentoxy group, a hexyloxy group, or the like, or may be a straight chain or branched alkoxy group of a structural isomer of them, or a cyclic alkoxy group such as a cyclopropoxy group, a cyclobutoxy group, a cyclopentoxy group, or a cyclohexyloxy group. The carbon number of the alkoxy group is preferably 1 to 12, and more preferably 1 to 6. Examples of the halogen atom include a fluorine atom, a chlorine atom, a bromine atom, an iodine atom, and so on.

An example of the (A) molybdenum complex is a molybdenum complex expressed by Formula (A1) below.

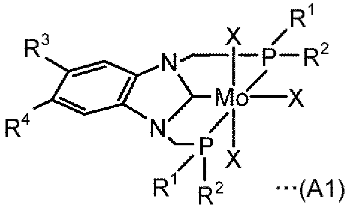

In the formula, R1 and R2 may be the same or different alkyl groups, X is an iodine atom, a bromine atom, or a chlorine atom, and at least one hydrogen atom on the benzene ring may be substituted with an alkyl group, an alkoxy group, or a halogen atom.

Examples of the alkyl group, alkoxy group, and halogen atom include those already exemplified. R1 and R2 are preferably bulky alkyl groups (for example, tert-butyl groups or isopropyl groups). It is preferable that the hydrogen atom on the benzene ring is not substituted or that hydrogen atoms at position 5 and position 6 are substituted with chain, cyclic, or branched alkyl groups with 1 to 12 carbons.

An example of the (B) molybdenum complex is a molybdenum complex expressed by Formula (B1), Formula (B2), and Formula (B3) below.

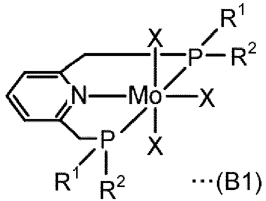

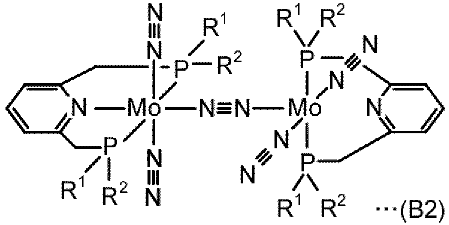

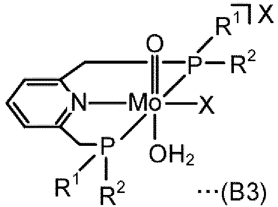

In the formula, R1 and R2 may be the same or different alkyl groups, X is an iodine atom, a bromine atom, or a chlorine atom, and at least one hydrogen atom on the pyridine ring may be substituted with an alkyl group, an alkoxy group, or a halogen atom.

Examples of the alkyl group, alkoxy group, and halogen atom include those already exemplified. R1 and R2 are preferably bulky alkyl groups (for example, tert-butyl groups or isopropyl groups). It is preferable that the hydrogen atom on the pyridine ring is not substituted or that a hydrogen atom at position 4 is substituted with a chain, cyclic, or branched alkyl group with 1 to 12 carbons.

An example of the (C) molybdenum complex is a molybdenum complex expressed by Formula (C1) below.

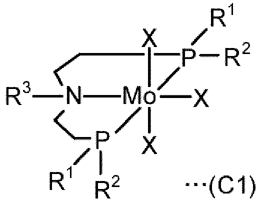

In the formula, R1 and R2 may be the same or different alkyl groups, R3 is an aryl group, and X is an iodine atom, a bromine atom, or a chlorine atom.

Examples of the alkyl group include those already exemplified. Examples of the aryl group include a phenyl group, a tolyl group, a xylyl group, a naphthyl group, the one in which at least one of cyclic hydrogen atoms of them is substituted with an alkyl group or a halogen atom, and so on. Examples of the alkyl group and halogen atom include those already exemplified. R1 and R2 are preferably bulky alkyl groups (for example, tert-butyl groups or isopropyl groups). R3 is preferably, for example, a phenyl group.

An example of the (D) molybdenum complex is a molybdenum complex expressed by Formula (D1) and Formula (D2) below.

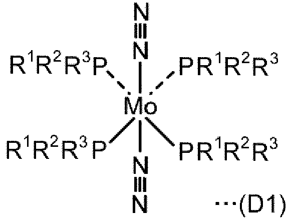

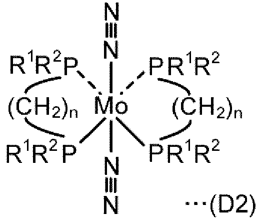

In the formula, R1, R2, and R3 may be the same or different alkyl groups or aryl groups, and n is 2 or 3.

Examples of the alkyl group and the aryl group include those already exemplified. In Formula (D1), it is preferable that R1 and R2 are aryl groups (for example, phenyl groups) and R3 is an alkyl group with 1 to 4 carbons (for example, a methyl group), or that R1 and R2 are alkyl groups with 1 to 4 carbons (for example, methyl groups) and R3 is an aryl group (for example, a phenyl group). In Formula (D2), it is preferable that R1 and R2 are aryl groups (for example, phenyl groups) and n is 2.

The ammonia production catalyst (reduction catalyst) that promotes the production of ammonia from nitrogen may be, for example, a metallocene complex expressed by Formula (E1) below.

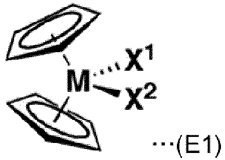

In the formula, M is a tetravalent metal ion, and is one of titanium, zirconium, and hafnium. X1 and X2 are the same or different anions having a coordination property. The anion is preferably Cl⁻, Br⁻, I⁻, CH₃⁻ or OH⁻, and more preferably Cl⁻ among them. Specifically, it is desirably a metallocene complex such as bis(cyclopentadienyl)titanium dichloride or bis(cyclopentadienyl)zirconium dichloride.

Further, as the ammonia production catalyst (reduction catalyst), a metal catalyst such as molybdenum, bismuth, iron, rhodium, ruthenium, titanium, or zirconium may be used. One of them may be used alone or two or more of them may be used in combination.

The catalyst support supports the ammonia production catalyst (reduction catalyst), and a porous carbon material is used. Examples of the porous carbon material (carbon particle) include channel black, furnace black, thermal black, acetylene black, activated carbon, natural graphite, artificial graphite, graphitized carbon, graphene, carbon nanotube (CNT), fullerene, ketjen black, glassy carbon, and so on. Among these, porous carbon materials with a BET average pore size of 1 nm or more and 15 nm or less are preferably used. The use of the porous carbon material with pores of the BET average pore size of 1 nm or more and 15 nm or less as the catalyst support makes it possible to densely and efficiently fix a molecular catalyst such as the molybdenum complex to the electrode. Accordingly, it becomes possible to obtain a three-phase interface control type reduction electrode 10 where nitrogen (N₂) can directly react. This can greatly enhance the production efficiency of ammonia by a gas phase.

By adsorbing and holding the ammonia production catalyst in the pores of the porous carbon material having the BET average pore size as described above, it can be used for the nitrogen reduction reaction as the catalyst support. For example, when the ammonia production catalyst is the molybdenum complex, the porous carbon particles are brought into contact with a solution in which the molybdenum complex is dissolved, and thereby, the molybdenum complex is attracted to the porous carbon particles by the attraction (Van der Waals force) from the porous carbon particles, causing adsorption to the pores of the porous carbon particles. A property of the porous carbon material that allows it to suitably hold the ammonia production catalyst is the BET average pore size as described above. To increase the reaction area, a specific surface area of the porous carbon material is preferably 800 m²/g or more and 2000 m²/g. Furthermore, to increase a catalyst holding amount, an average pore volume of the porous carbon material is preferably 0.2 cm³/g or more and 5 cm³/g or less.

A membrane capable of selectively distributing anions or cations is used for the diaphragm 4. As the diaphragm 4, for example, an ion exchange membrane such as NEOSEPTA (registered trademark) of ASTOM Corporation, Selemion (registered trademark) of Asahi Glass Co., Ltd., Aciplex (registered trademark) of Asahi Kasei Corp., Fumasep (registered trademark) and fumapem (registered trademark) of Fumatech GmbH., Nafion (registered trademark) being a fluorocarbon resin made by sulfonating and polymerizing tetrafluoroethylene of DuPont Inc., lewabrane (registered trademark) of LANXESS Co. Ltd., IONSEP (registered trademark) of IONTECH Inc., Mustang (registered trademark) of PALL Corp., ralex (registered trademark) of mega Corp., Gore-Tex (registered trademark) of Gore-Tex Inc., Sustainion (registered trademark) of Dioxide Materials Inc., PiperION (registered trademark) of Versogen Inc., or the like can be used. Anion exchange membranes are preferred because of their advantage in increasing ammonia production.

The diaphragm 4 can be made of a silicone resin, a fluorine-based resin such as perfluoroalkoxyalkane (PFA), perfluoroethylene-propene copolymer (FEP), polytetrafluoroethylene (PTFE), ethylene-tetrafluoroethylene copolymer (ETFE), polyvinylidene fluoride ( PVDF), polychlorotrifluoroethylene (PCTFE), or ethylene-chlorotrifluoroethylene copolymer (ECTFE), a ceramic porous membrane, a filling that is filled with a glass filter or agar, an insulating porous body such as zeolite or oxide, or the like can be used, in addition to the ion exchange membrane. A hydrophilic porous membrane is preferred as the diaphragm 4 because it is not clogged by air bubbles.

In the electrolysis device 1 illustrated in FIG. 1, the nitrogen supply device 6 is a unit that supplies gaseous nitrogen to the first reaction tank (cathode tank/ reduction chamber) 2. As the nitrogen to be supplied from the nitrogen supply device 6, for example, nitrogen in the air is used but is not limited thereto. Since about 21% of oxygen is contained in the air, it is preferable to separate oxygen in advance and then take out nitrogen. In the case of using nitrogen in the air, an oxygen separation device that separates oxygen in the air and takes out nitrogen is used for the nitrogen supply device 6. As a separation method of oxygen in the air in the oxygen separation device, for example, the cryogenic separation method of separating oxygen by utilizing a difference in boiling point, the adsorption separation method utilizing a difference in adsorbing characteristics with respect to gas molecules of a zeolite-based adsorbent, the membrane separation method of separating oxygen by utilizing the fact that the speed of permeating a membrane differs depending on gas molecules, or the like is used and can be appropriately selected according to the cost and device scale, and the separation method is not particularly limited.

### (Second Embodiment)

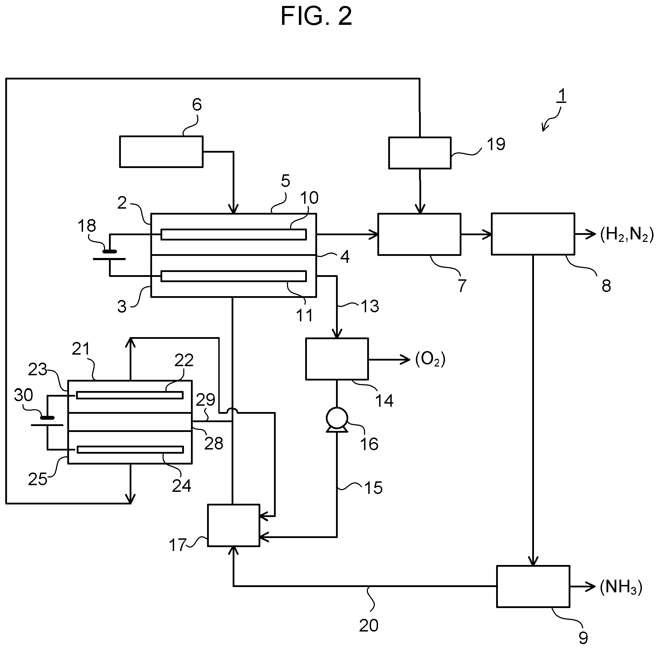

Next, the electrolysis device 1 of a second embodiment will be described with reference to FIG. 2 to FIG. 5. In addition to each component of the electrolysis device 1 of the first embodiment illustrated in FIG. 1, the electrolysis device 1 of the second embodiment illustrated in FIG. 2 includes a second electrolysis cell 21 that separates electrolytic solution components (for example, metal salts) separated in the distiller 9 into a base-containing portion and a metal-containing portion of the electrolytic solution components, and that enables the separated base-containing portion to be reused as the liquefaction recovery agent. Except for the second electrolysis cell 21 and the portion including the second electrolysis cell 21, the electrolysis device 1 has the same configuration as the electrolysis device 1 of the first embodiment.

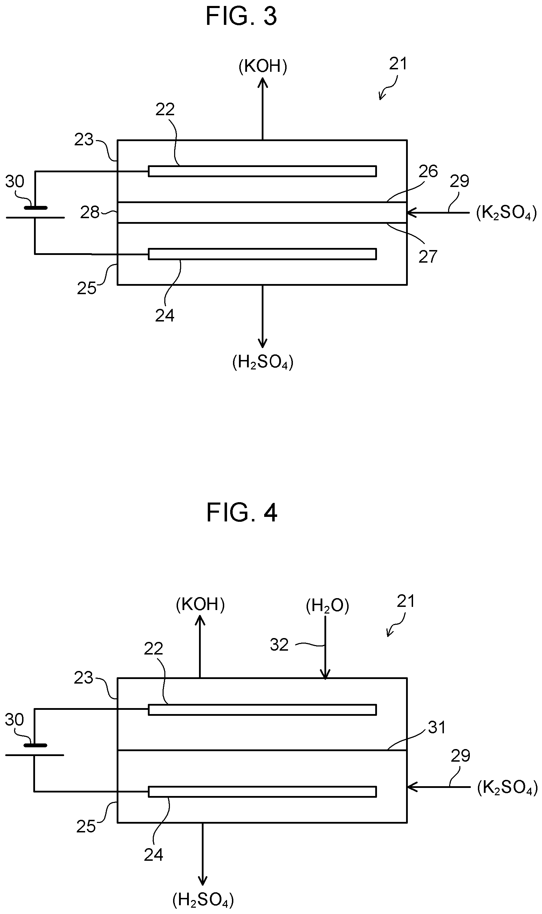

A first example of the second electrolysis cell 21 is illustrated in FIG. 2 and FIG. 3. The second electrolysis cell 21 in the first example includes a first reaction tank (cathode tank) 23 in which a reduction electrode 22 is arranged, a second reaction tank (anode tank) 25 in which an oxidation electrode 24 is arranged, a first diaphragm 26 arranged between the first reaction tank 23 and the second reaction tank 25 on the first reaction tank 23 side, and a solution feeding tank 28 with a second diaphragm 27 arranged on the second reaction tank 25 side. A cation exchange membrane is used for the first diaphragm 26 so that metal ions can move to the first reaction tank 23. An anion-exchange membrane is used for the second diaphragm 27 so that base ions, such as sulfate ions, can move to the second reaction tank 25.

The electrolytic solution is sent to the solution feeding tank 28 by a solution feeding pipe 29, which branches off from the second circulation pipe 15. A power supply 30 is connected to the reduction electrode 22 and oxidation electrode 24. When electric power is applied to the reduction electrode 22 and oxidation electrode 24 from the power supply 30, metal ions, which are cations, move to the first reaction tank 23, and base ions, which are anions, move to the second reaction tank 25. For example, when potassium sulfate (K₂SO₄) is used as the electrolytic solution, the potassium sulfate sent to the solution feeding tank 28 is ionized into potassium ions (K⁺) and sulfate ions (SO₄²⁻), and the potassium ions (K⁺) move to the first reaction tank 23 to become potassium hydroxide (KOH) and the sulfate ions (SO₄²⁻) move to the second reaction tank 25 to become sulfuric acid (H₂SO₄).

Sulfuric acid produced in the second reaction tank 25 is sent to the supply device 19 as the liquefaction recovery agent to be supplied to the gas-liquid contact device 7 as the liquefaction recovery agent. Potassium hydroxide produced in the first reaction tank 23 is sent to the electrolytic solution storage tank 17 and used as a concentration-adjusting agent for the electrolytic solution. The case when potassium sulfate (K₂SO₄) is used as the electrolytic solution and sulfuric acid (H₂SO₄) is used as the liquefaction recovery agent is given here as an example, but is not limited thereto. The same applies in the same manner when other sulfates are used as the electrolytic solution, and sulfuric acid is produced in the second reaction tank 25 and hydroxides from metal ions of sulfate are produced in the first reaction tank 23 to be respectively used as the liquefaction recovery agent and concentration-adjusting agent for the electrolytic solution.

A second example of the second electrolysis cell 21 is described with reference to FIG. 4. The second electrolysis cell 21 of the second example has the first reaction tank 23 in which the reduction electrode 22 is arranged, the second reaction tank 25 in which the oxidation electrode 24 is arranged, and a diaphragm 31 arranged between the first reaction tank 23 and second reaction tank 25. Electrolytic solution is sent to the second reaction tank 25 through the solution feeding pipe 29, and pure water (H₂O) is sent to the first reaction tank 23 through a pipe 32. A cation-exchange membrane is used for the diaphragm 31 so that metal ions can move from the second reaction tank 25 to the first reaction tank 23.

According to the electrolysis cell 21 illustrated in FIG. 4, sulfuric acid is produced in the second reaction tank 25, and hydroxides (such as KOH) from metal ions of sulfate are produced in the first reaction tank 23. Therefore, sulfuric acid produced in the second reaction tank 25 can be used as the liquefaction recovery agent, and hydroxides of metal ions produced in the first reaction tank 23 can be used as the concentration-adjusting agent for the electrolytic solution. In the electrolysis cell 21 illustrated in FIG. 4, while hydroxides of metal ions such as KOH can be easily extracted, purity of sulfuric acid tends to slightly decrease.

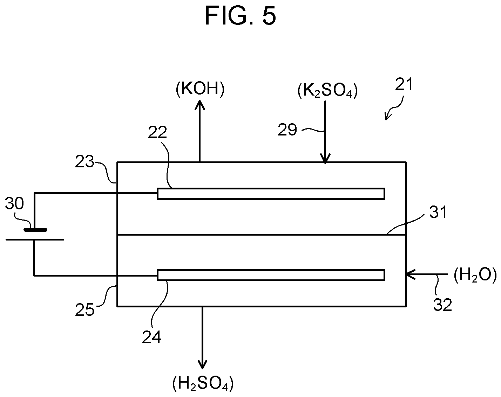

A third example of the second electrolysis cell 21 is described with reference to FIG. 5. The second electrolysis cell 21 of the third example includes the first reaction tank 23 in which the reduction electrode 22 is arranged, the second reaction tank 25 in which the oxidation electrode 24 is arranged, and the diaphragm 31 arranged between the first reaction tank 23 and second reaction tank 25. The electrolytic solution is sent to the first reaction tank 23 through the solution feeding pipe 29, and pure water (H₂O) is sent to the second reaction tank 25 through the pipe 32. An anion-exchange membrane is used for the diaphragm 31 so that sulfate ions can move from the first reaction tank 23 to the second reaction tank 25.

According to the electrolysis cell 21 illustrated in FIG. 5, sulfuric acid is produced in the second reaction tank 25, and hydroxides (such as KOH) from metal ions of sulfate are produced in the first reaction tank 23. Therefore, sulfuric acid produced in the second reaction tank 25 can be used as the liquefaction recovery agent, and hydroxides of metal ions produced in the first reaction tank 23 can be used as the concentration-adjusting agent for the electrolytic solution. In the electrolysis cell 21 illustrated in FIG. 5, while sulfuric acid can be easily extracted, the purity of hydroxides of metal ions such as KOH tends to slightly decrease. The second electrolysis cell 21 can be used by selecting the first to third examples as appropriate based on intended uses and required accuracy.

Note that the configurations of the above-explained embodiments are applicable in combination. Further, parts thereof are replaceable. While certain embodiments of the present invention have been described above, these embodiments have been presented by way of example only, and are not intended to limit the scope of the invention. These embodiments may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. An electrolysis device, comprising:
a first electrolysis cell that includes: a first reaction tank in which a reduction electrode is arranged, a substance to be reduced is supplied, and a water-soluble gas is produced as a reduction product; a second reaction tank in which an oxidation electrode is arranged and an electrolytic solution is supplied; and a diaphragm provided between the first reaction tank and the second reaction tank;
a substance to be reduced supply part that supplies the substance to be reduced to the first reaction tank;
an electrolytic solution circulation unit that includes a circulation pipe for circulating the electrolytic solution outside the first electrolysis cell and a storage tank of the electrolytic solution to supply the electrolytic solution to the second reaction tank;
a gas-liquid contact device that is supplied with at least one of the water-soluble gas and its water-soluble substance produced in the first reaction tank, brings a liquefaction recovery agent containing at least some components of the electrolytic solution into contact with at least one of the water-soluble gas and its water-soluble substance, and discharges a gas-liquid mixture containing a liquefied substance of the water-soluble gas;
a first gas-liquid separator that is supplied with the gas-liquid mixture discharged from the gas-liquid contact device to separate into a liquid component containing the liquefied substance of the water-soluble gas and a gas component;
a distiller that separates the liquid component discharged from the first gas-liquid separator into the liquefied substance of the water-soluble gas and an electrolytic solution component, and
a return pipe that returns the electrolytic solution component discharged from the distiller to a storage part of the electrolytic solution.

2. The electrolysis device according to claim 1, wherein
the substance to be reduced is nitrogen, the water-soluble gas is ammonia,
the liquefaction recovery agent is sulfuric acid or sulfate, and
the ammonia is liquefied as ammonium sulfate in the gas-liquid contact device.

3. The electrolysis device according to claim 1 or 2, wherein
a distillate obtained in the distiller is liquefied by a device that performs at least one of cooling and compression.

4. The electrolysis device according to claim 1 or 2, wherein
the electrolytic solution circulation unit includes a second gas-liquid separator that is supplied with the electrolytic solution containing gas as an oxidation product produced in the second reaction tank and separates the electrolytic solution from the gas as the oxidation product.

5. The electrolysis device according to claim 1, further comprising:
a second electrolysis cell that includes: a first reaction tank in which a reduction electrode is arranged; a second reaction tank in which an oxidation electrode is arranged; and a diaphragm provided between the first reaction tank and the second reaction tank, is supplied with the electrolytic solution component separated in the distiller, separates a base-containing portion in the electrolytic solution component, and returns the separated base-containing portion as the liquefaction recovery agent to the gas-liquid contact device.

6. The electrolysis device according to claim 5, wherein
the substance to be reduced is nitrogen, the water-soluble gas is ammonia,
the liquefaction recovery agent is sulfuric acid or sulfate,
the ammonia is liquefied as ammonium sulfate in the gas-liquid contact device, and
the base-containing portion separated in the second electrolysis cell is sulfuric acid.

7. An electrolysis method, comprising:
producing a water-soluble gas as a reduction product by reducing a substance to be reduced using a first electrolysis cell including a first reaction tank in which a reduction electrode is arranged, a second reaction tank in which an oxidation electrode is arranged, and a diaphragm provided between the first reaction tank and the second reaction tank by supplying the substance to be reduced to the first reaction tank, supplying an electrolytic solution to the second reaction tank, and supplying electric power to the reduction electrode and the oxidation electrode;
obtaining a gas-liquid mixture containing a liquefied substance of the water-soluble gas by bringing at least one of the water-soluble gas and its water-soluble substance produced in the first reaction tank into contact with a liquefaction recovery agent containing at least some components of the electrolytic solution;
separating the gas-liquid mixture into a liquid component containing the liquefied substance of the water-soluble gas and a gas component;
separating the liquefied substance of the water-soluble gas from an electrolytic solution component by distilling the liquid component containing the liquefied substance of the water-soluble gas; and
returning the electrolytic solution component separated from the liquid component to the second reaction tank.

8. The electrolysis method according to claim 7, wherein
the electrolytic solution is circulated from the second reaction tank through a second gas-liquid separator and a storage tank of the electrolytic solution by a circulation pipe arranged outside the first electrolysis cell.

9. The electrolysis method according to claim 7 or 8, wherein
the substance to be reduced is nitrogen, the water-soluble gas is ammonia,
the liquefaction recovery agent is sulfuric acid or sulfate; and
the ammonia is liquefied as ammonium sulfate by the liquefaction recovery agent.

10. The electrolysis method according to claim 7 or 8, wherein
a distillate from the distillation is liquefied by performing at least one of cooling and compression.

11. The electrolysis method according to claim 7 or 8, further comprising:
sending the electrolytic solution component obtained by the distillation to a second electrolysis cell, separating a base-containing portion in the electrolytic solution component, and using the separated base-containing portion as the liquefaction recovery agent.

12. The electrolysis method according to claim 11, wherein
the substance to be reduced is nitrogen, the water-soluble gas is ammonia,
the liquefaction recovery agent is sulfuric acid or sulfate,
the ammonia is liquefied as ammonium sulfate by the liquefaction recovery agent, and
the base-containing portion is sulfuric acid.
